# EUROPÄISCHE PATENTSCHRIFT

(11) **EP 0 981 947 B1**
(45) Veröffentlichungstag und Bekanntmachung des Hinweises auf die Patenterteilung: **23.02.2005**
(21) Anmeldenummer: 99116380.9
(22) Anmeldetag: 20.08.1999
(51) Int. Cl.: A01F 15/14

(54) **Garnführungszusammenbau und Rundballenpresse**
Twine deliveringsystem and roundbaler
Système de guidage de la ficelle dans une presse à balles rondes

(30) Priorität: 26.08.1998 US 140086
(43) Veröffentlichungstag der Anmeldung: 01.03.2000
(73) Patentinhaber: DEERE & COMPANY, Moline, Illinois 61265-8098 (US)
(72) Erfinder: Taylor, Mark Ronald, Ottumwa, IA 52501 (US); Frimml, Roger William, Ottumwa, IA 52501 (US); Anstey, Henry Dennis, Ottumwa, IA 51501 (US)
(74) Vertreter: Magin, Ludwig Bernhard

(56) Entgegenhaltungen:
- EP-A- 0 095 681
- WO-A-98/17095
- US-A- 4 627 340
- US-A- 5 465 658

## Beschreibung

Die Erfindung betrifft einen Garnführungszusammenbau mit einem Garnführungsfinger, der einerseits von einem Halter aufgenommen ist und andererseits einen Garnführungsabschnitt aufweist, und eine Rundballenpresse.

Die US-A-5,215,006 offenbart eine Garnbindevorrichtung mit zwei Garnzuführungsarmen und jeweils einem Garnführungsfinger an jeder Innenseite eines Ballenpreßraums. Der Garnführungsfinger ist einenends mit einem Gewindeabschnitt versehen und kann mittels einer Mutter in einem Schlitz eines Halters arretiert werden. Der Garnführungsfinger kann innerhalb geringer Grenzen entlang des Schlitzes verstellt werden, wozu eine Bedienungsperson jedoch im Bereich der Ballenpreßkammer bzw. in dem Guteinzugsbereich arbeiten muß. Zudem bilden die Mutter und der Gewindeabschnitt eine unebene Oberfläche, auf der sich Erntegut ansammeln kann.

Aus der US-A-4,169,410 geht eine vergleichbare Rundballenpresse hervor, wobei der Garnführungsfinger mittels einer Hülse auf einer Achse ortsfest gelagert ist.

Die Betriebsanleitung OMCC40848 K6 der JOHN DEERE Rundballenpresse 575 zeigt einen Garnführungsfinger, der in einer eine Seitenwand der Ballenpreßkammer durchdringenden Hülse axial beweglich gelagert ist und in verschiedenen Stellungen arretiert werden kann. Hierzu ist außerhalb der Ballenpreßkammer ein Splint vorgesehen, der durch Öffnungen in der Hülse und eine der diametralen Öffnungen in dem Schaft des Garnführungsfingers gesteckt werden kann.

Die WO 98/17095 offenbart eine Rundballenpresse mit einer Garnbindungsvorrichtung, die eine Garnführung umfaßt. Diese Garnführung weist einen an einem Halter angebrachten Garnführungsfinger auf. Der Halter wiederum ist mit einer Seitenwand der Rundballenpresse derart federbelastet verbunden, dass er sich normalerweise in einer Außer-Betriebs-Stellung befindet und durch einen Garnzufuhrarm in eine Betriebsstellung gebracht werden kann, in der er durch einen Sperrmechanismus festgelegt werden kann.

Allen bekannten Garnführungsfingern ist gemeinsam, daß sie in den Guteinzugsbereich hineinragen und dort mit dem Erntegut in Eingriff gelangen können.

Das der Erfindung zugrunde liegende Problem wird darin gesehen, daß die bekannten Garnführungsfinger zu Störungen des Gutflusses führen können und damit ausgestattete Rundballenpressen evtl. nicht störungsfrei arbeiten.

Dieses Problem wird erfindungsgemäß durch die Lehre des Patentanspruchs 1 bzw. 10 gelöst, wobei in den weiteren Patentansprüchen die Lösung in vorteilhafter Weise weiterentwickelnde Merkmale aufgeführt sind.

Auf diese Weise kann der Garnführungsabschnitt bei entsprechendem Gutanfall ausweichen und vermeidet damit, daß es zu Gutstaus kommt.

Die Ausbildung des Garnführungsabschnitts derart, daß er in einer Richtung leichter gebogen werden kann als in der anderen, also z. B. in der Gutflußrichtung leichter biegt, als quer dazu, hat den Vorteil, daß Behinderungen des Gutflusses unterbleiben und zudem eine ausreichende Garnführung in bezug auf die Seitenwand der Ballenbildungskammer erhalten bleibt.

Um Materialermüdungen und/oder eine Überstreckung zu vermeiden, ist ein Anschlag vorgesehen, der beliebig ausgebildet sein kann und an dem sich der Garnführungsabschnitt nach einem bestimmten Weg anlegen kann.

Der Garnführungsfinger könnte grundsätzlich beliebig ausgeführt werden, solange er in der Gutflußrichtung nachgibt. Eine technisch einfache und somit auch kostengünstige Lösung wird jedoch in der Verwendung einer Schraubenfederbauweise gesehen. Eine derartige Schraubenfeder kann sich über einen weiten Bereich verdrehen, bzw. auslenken und mit einem gerade auslaufenden Endabschnitt gefertigt werden, an dem das Garn schließlich zur Anlage kommt. Unter Schraubenfeder wird hauptsächlich eine Feder verstanden, deren Windungen im wesentlichen auf einem gedachten Zylinder verlaufen. Daneben kann auch eine Feder mit konisch zulaufenden Windungen gemeint sein, die also mehr eine Spiral- als eine Schraubenfeder darstellt. Schließlich kann die mit Schraubenfeder bezeichnete Feder auch eine reine Spiralfeder, deren Windungen in einer Ebene liegen, oder eine Torsionsfeder sein.

Während die Widerstandskraft in der einen Richtung, nämlich der Gutflußrichtung, durch den Biegewiderstand der Schraubenfeder selbst aufgebaut wird, wird der höhere Biegewiderstand quer zur Gutflußrichtung dadurch erreicht, daß die Windungen zu einem sie aufnehmenden Fingerhalter einen Abstand aufweisen und sich somit selbst blockieren.

Ein Fingerhalter, auf dem der Garnführungsabschnitt gehalten ist, könnte als einfache Stange oder dergleichen ausgebildet werden; wird er jedoch mit einem U-förmigen Endabschnitt ausgeführt, kann einer der Abschnitte, also ein Schenkel, als Anschlag für den Garnführungsfinger dienen. Es wäre somit auch möglich, den Fingerhalter zu verdrehen und dadurch die Lage des Anschlags zu verändern.

Eine alternative Ausführungsform des Garnführungsfingers sieht vor, daß er in sich starr ausgebildet aber schwenkbeweglich gelagert ist, was wiederum gegen den Widerstand einer Feder geschieht, die den Garnführungsabschnitt in der richtigen Stellung hält. Hierdurch ergibt sich eine besonders hohe Widerstandskraft in der Richtung der Ballenmittenachse.

In einer einfachen Weise wird die schwenkbewegliche Lagerung gegen einen Widerstand einerseits und die Steifigkeit quer dazu andererseits wiederum mittels einer Feder, insbesondere einer Schraubenfeder erreicht, die den Garnführungsabschnitt und eine an einem Halter befestigte Befestigungsstange jeweils endseitig aufnimmt. Zur Verbindung können jeweils endseitig an der Schraubenfeder Schlaufen oder Ösen vorgesehen werden.

Eine Verstellung des Garnführungsfingers in der Richtung der Mittenachse des Rundballens bzw. der Ballenbildungskammer kann ohne Werkzeug dadurch bewerkstelligt werden, daß der Garnführungsfinger endseitig mit einer Schraube und einem auf dieser aufschraubbaren Handrad versehen ist, mit dem diese Schraube an dem Halter festgelegt oder gelöst werden kann.

Erfindungsgemäße Garnführungen können beliebig eingesetzt werden; hervorragend eignen sie sich jedoch an Rundballenpressen insbesondere beim Einsatz in der Landwirtschaft, weil dort eine Anpassungsfähigkeit an unterschiedliche Situationen gegeben sein muß, und der Eintritt von Umständen, die den Gutstrom stören können, kaum vorhersehbar ist.

Die Anordnung des Garnführungsfingers derart, daß er im Schnittbereich durch die Drehachsen einer oberhalb eines Guteinlasses vorgesehenen Ballenstarterwalze und einer Riemenwalze verlaufender horizontaler und vertikaler Ebenen liegt, hat den Vorteil, daß selbst Riemen, die zu Wartungszwecken gelockert werden, nicht an dem Garnführungsfinger hängen bleiben und diesen somit auch nicht bei Wartungsarbeiten beschädigen.

Wenn sich ein Halter, in dem der Garnführungsfinger verstellbar festgelegt ist, außerhalb der Ballenbildungskammer befindet, kann der Abstand, den das Garn zum Ende des Rundballens einhalten muß, bequem und sicher eingestellt werden.

Es ist in vielen Fällen zwar ausreichend, wenn der Garnführungsfinger in Stufen verstellbar ist; besondere Erntebedingungen lassen sich jedoch einfacher meistern, wenn die Verstellung stufenlos möglich ist, was durch die Verwendung eines Einstellschlitzes außerhalb der Ballenbildungskammer erreicht werden kann.

Wenn der Garnführungsfinger in mehreren voneinander beabstandeten und fluchtenden Öffnungen geführt ist, ist er ausreichend fest gelagert, um den Kräften des Ernteguts zu widerstehen.

Wenn der Wirkungsbereich des Garnführungsfingers an der Rundballenpresse insbesondere von einem Zugfahrzeug aus relativ schlecht einsehbar ist, kann eine Prüfung der bestehenden Einstellung dadurch erreicht werden, daß der außerhalb der Ballenbildungskammer gelegene Halter mit mehreren Markierungen versehen ist.

In der Zeichnung sind zwei nachfolgend näher beschriebene Ausführungsbeispiele der Erfindung dargestellt. Es zeigt:
- Fig. 1: einen Bereich einer Rundballenpresse in Seitenansicht und schematischer Darstellung,
- Fig. 2: einen Garnbindemechanismus der Rundballenpresse in Draufsicht,
- Fig. 3: den Garnbindemechanismus nach Figur 2 in einer Ansicht von vorne,
- Fig. 4: einen Garnführungszusammenbau mit einem Garnführungsfinger während zweier Betriebszustände, jeweils in Seitenansicht,
- Fig. 5: eine alternative Ausführungsform des Garnführungszusammenbaus in Draufsicht und
- Fig. 6: den Garnführungszusammenbau nach Figur 5 in einer Ansicht von vorne.

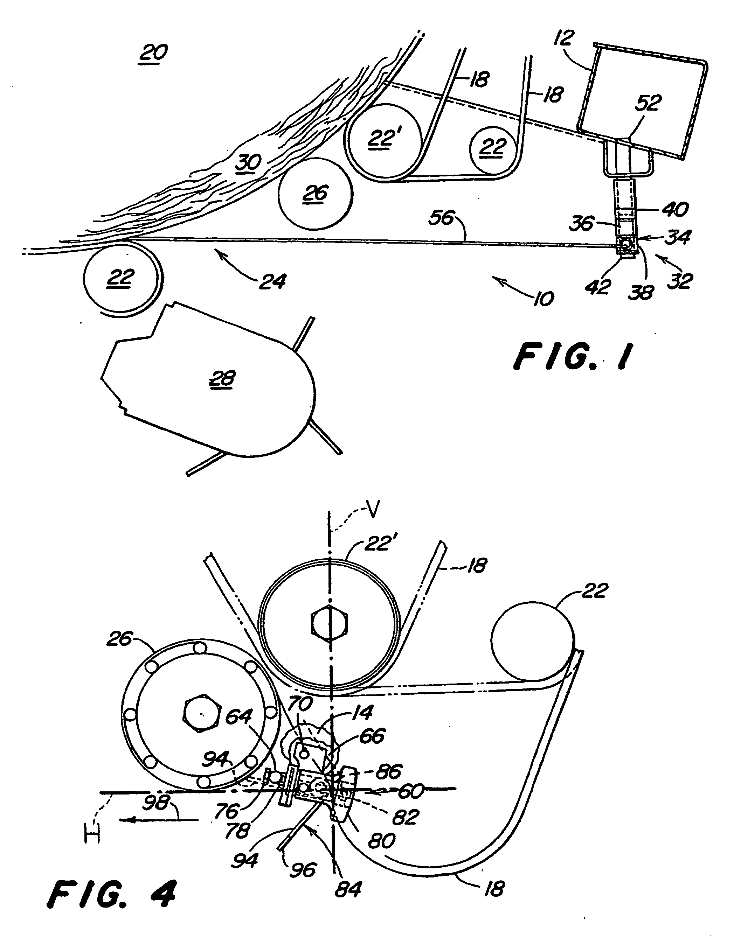

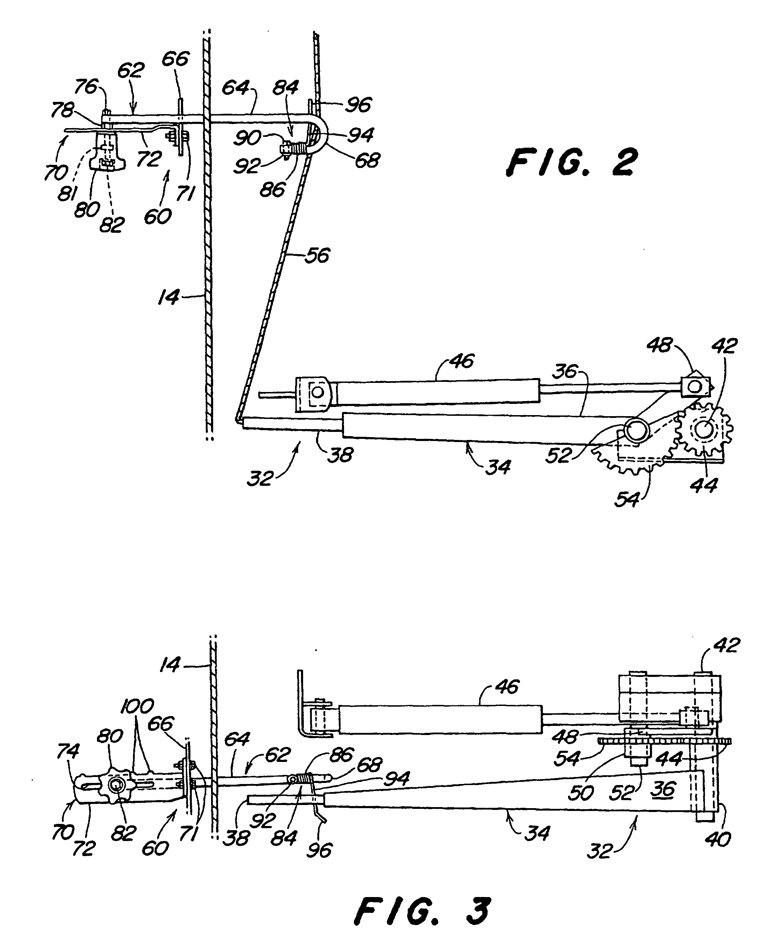

In den Figuren 1 bis 3 ist ein Bereich einer Rundballenpresse 10 mit einem Rahmen 12 gezeigt, der rechte und linke Seitenwände aufweist, von denen nur die rechte Seitenwand 14 gezeigt ist (Figuren 2 und 3). Die Seitenwände 14 wirken mit einer Vielzahl von Riemen 18, die einen Ballen 30 bilden, zusammen, um eine Ballenbildungskammer 20 zu definieren, wobei die Riemen 18 nebeneinander auf einer Vielzahl von Riemenwalzen 22 getragen werden, von denen eine Riemenwalze 22' die Riemen 18 antreibt. Ein Guteinlaß 24 wird zwischen der Riemenwalze 22' und einer der Riemenwalzen 22 an einer vorderen unteren Stelle der Ballenbildungskammer 20 gebildet. Innerhalb des Guteinlasses 24 nahe der Riemenwalze 22' befindet sich eine Ballenstarterwalze 26. Ein Gutaufnehmer 28 ist vorgesehen, um ein Schwad aus Erntegut von dem Boden aufzunehmen und in den Guteinlaß 24 einzuführen, um so aufgrund der Wirkung der Riemen 18 zu dem Ballen 30 aufgerollt zu werden.

Ein Garnbindemechanismus 32 ist vorgesehen, um den Ballen 30 mit Garn umwickeln zu können, wenn der Ballen 30 innerhalb der Ballenbildungskammer 20 eine gewünschte Größe erreicht hat. Es wird bemerkt, daß der hier gezeigte Garnbindemechanismus 32 nur repräsentativ für verschiedene Typen von Garnbindemechanismen steht, mit der die vorliegende Erfindung angewandt werden könnte. Im einzelnen enthält der Garnbindemechanismus 32 einen Bindearm 34, der als ein sich verjüngend verlaufender Kanalteil 36 ausgebildet ist, der an seinem äußeren Ende ein Abgaberohr 38 besitzt. Der Bindearm 34 besitzt ein inneres Ende, das von einem aufrechten Schwenkrohr 40 gebildet wird, das mittels eines Schwenkbolzens 42 zum Schwenken um eine aufrechte Achse montiert ist, wobei der Schwenkbolzen 42 an dem Rahmen 12 an einer Stelle befestigt ist, die ungefähr auf der halben Strecke zwischen den sich gegenüberliegenden Seiten der Rundballenpresse 10 liegt. An dem Schwenkrohr 40 ist ein Antriebszahnrad 44 (Fig. 2 und 3) angebracht. Ein aus- und einfahrbares Betätigungsglied 46 ist zwischen den Rahmen 12 und einen Kurbelarm 48 angeschlossen, der mit einem Rohr 50 verbunden ist, das zum Schwenken um einen Schwenkbolzen 52 montiert ist, der mit geringem Abstand und parallel zu dem Schwenkbolzen 42 an dem Rahmen 12 angebracht ist. Ein Zahnrad 54 ist an das Rohr 50 angebracht und kämmt derart mit dem Antriebszahnrad 44, daß ein Aus- und Einfahren des Betätigungsglieds 46 bewirkt, daß der Bindearm 34 zwischen den gegenüberliegenden Seitenwänden 14 des Ballenpreßraums 20 vor und zurück geschwenkt wird. Eine nicht gezeigte Garnrolle bildet die Quelle für das benutzte Garn, und ein Garnabschnitt 56, der mit der Garnrolle verbunden ist, ist gezeigt, wie er durch einen nicht gezeigten Garnspanner an dem Kanalteil 36 und durch das Abgaberohr 38 gezogen ist.

Ein Garnführungszusammenbau 60 ist an der rechten Seitenwand 14 (Figuren 2 und 3) angebracht. Es wird darauf hingewiesen, daß ein vergleichbarer Garnführungszusammenbau 60 genauso gut auch an der linken Seitenwand angebracht sein könnte. Der Garnführungszusammenbau 60 enthält einen stangenartigen Fingerhalter 62 mit einem geraden Abschnitt 64, der sich axial durch fluchtende Löcher erstreckt, die in der Seitenwand 14 und einer Wand 66 vorgesehen sind, die einen Teil eines Halters für ein Antriebswellenlager bildet, der an eine äußere Oberfläche der Seitenwand 14 angeschraubt ist. Das innere Ende des geraden Abschnitts 64 des Fingerhalters 62 ist an einen zurückgebogenen Abschnitt 68 angeschlossen. Der Fingerhalter 62 wird mittels eines L-förmigen Halters 70 an Ort und Stelle gehalten, wobei der Halter 70 einen langen Schenkel 72 aufweist, der zu dem Abschnitt 64 parallel angeordnet ist und einen Einstellschlitz 74. Eine Schraube 76 zum Halten eines Handrads 80 erstreckt sich durch ein Loch nahe dem Ende des Abschnitts 64 und ist an dem Abschnitt 64 mittels einer Mutter 78 gesichert, die sich zwischen dem Abschnitt 64 und dem langen Schenkel 72 befindet. Die Schraube 76 erstreckt sich über die Mutter 78 hinaus und durch den Einstellschlitz 74. Auf der Schraube 76 ist das Handrad 80 vorgesehen, um die Schraube 76 an den langen Schenkel 72 anzudrücken, das vorzugsweise aus Kunststoff besteht und einen metallenen Gewindeeinsatz 81 (Fig. 2) aufweist, der eingegossen und auf die Schraube 76 aufgeschraubt ist. Eine Sicherungsmutter 82 ist auf dem äußeren Ende der Schraube 76 mit reichlich Spiel zwischen der Sicherungsmutter 82 und dem Handrad 80 aufgenommen, so daß es nicht zu Berührungen beim Lösen des Handrads 80 kommt, wenn zu einem unten erläuterten Zweck das Einstellen des Fingerhalters 62 gewünscht wird.

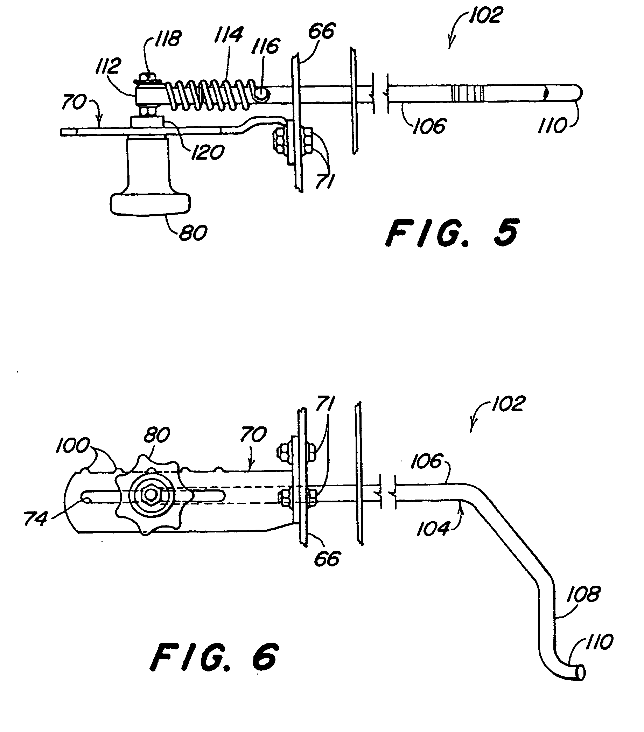

Ein Garnführungsfinger 84, der aus Federdraht oder einem Federstab gebildet ist, weist eine Vielzahl von Windungen 86 auf, die auf dem nach hinten gebogenen Abschnitt 68 des Fingerhalters 62 aufgenommen sind, und endet der Seitenwand 14 zugelegen in einer Schlaufe, die, wie auch ein Loch nahe des freien Endes des Abschnitts 66, eine Befestigungsschraube 90 aufnimmt, wobei die Schraube 90 eine Mutter 92 aufnimmt, die den Garnführungsfinger 84 ortsfest hält. An einem inneren Ende der Windungen 86 entfernt von der Schlaufe befindet sich ein Garnführungsabschnitt 94, der sich nach unten und hinten erstreckt und einen unten nach außen gebogenen Endbereich 96 (Figur 4) aufweist, der sich ungefähr unterhalb einer Stelle befindet, an der sich der gerade und der zurückgebogene Abschnitt 64 und 68 des Fingerhalters 62 treffen.

Wie dies am besten in Figur 4 zu erkennen ist, ist der Garnführungszusammenbau 60 derart untergebracht, daß der zurückgebogene Abschnitt 68 ungefähr im Schnittpunkt einer vertikalen Linie V, die durch die Mitte der Riemenwalze 22' führt, und einer horizontalen Linie H, die tangential zu der Unterseite der Ballenstarterwalze 26 verläuft, gelegen ist. Der Garnführungszusammenbau 68 befindet sich daher unmittelbar vor einem unteren Bereich der Ballenstarterwalze 26. In dieser Stellung erstreckt sich der Garnführungsabschnitt 94 nach unten und hinten in einen Gutflußbereich 98, durch den sich Gut bewegt, wenn es in den Guteinlaß 24 gefördert wird. Es wird darauf hingewiesen, daß die Windungen 86 derart gewunden sind, daß der Garnführungsabschnitt 94 dazu neigt, nachgiebig nach oben auszuweichen, um so die Windungen 86 zu spannen, wenn er von Gut beaufschlagt wird. Obwohl der Garnführungsabschnitt 94 von vorne nach hinten ziemlich flexibel ist, übt er jedoch eine beträchtliche seitliche Steifigkeit aus, weil der Innendurchmesser der Windungen 86 geringfügig größer ist als der Außendurchmesser des Fingerhalters 62. Das maximale Maß der Ausbiegung des Garnführungsabschnitts 94 ist in unterbrochenen Linien gezeigt, wobei der Garnführungsabschnitt 94 dann nahe der Ballenstarterwalze 26 endet und an den Fingerhalter 62 anschlägt, der eine weitere aufwärts gerichtete Bewegung verhindert. Es ist offensichtlich, daß ein nachgiebiges Kunststoffmaterial anstelle des als Spiralfeder ausgebildeten Garnführungsfingers 84 verwendet werden könnte, wobei der Kunststoffinger im allgemeinen eine Form wie der Garnführungsabschnitt 94 aber einen Querschnitt hätte, der in einer beträchtlichen Vor- und Zurück-Flexibilität aber einer seitlichen Steifigkeit resultieren würde. Da der Fingerhalter 62 an einer Stelle nahe der Ballenstarterwalze 26 und daher nahe des Guteinlasses 24 angebracht ist, besteht keine Gefahr, daß der Fingerhalter 62 in Berührung mit einem während der Wartungsarbeiten gelockerten Riemen 18 kommt. Diese Positionierung des Garnführungszusammenbaus 60 wird ermöglicht, weil der Garnführungsabschnitt 94 nur minimal mit dem Gutfluß in Berührung kommt.

Eine Einstellung des Fingerhalters 62 verändert die Entfernung, um die der Garnführungsabschnitt 94 von der Seitenwand 14 beabstandet ist. Im einzelnen kann durch das Lösen des Handrads 80 die Schraube 76 in dem Einstellschlitz 74 nach innen oder außen geschoben werden, um den Fingerhalter 62 zwischen einer äußersten Stellung, die von dem äußeren Ende des Einstellschlitzes 74 definiert wird, und einer innersten Stellung, die von dem inneren Ende des Einstellschlitzes 74 definiert wird, einzustellen. Wie dies am besten in Figur 3 zu erkennen ist, sind entlang der Oberkante des langen Schenkels 72 gleichmäßig mehrere als Erhebungen ausgebildete Markierungen 100 verteilt, um einer Bedienungsperson eine visuelle Anzeige der eingestellten Stellung des Garnführungsabschnitts 94 zu geben. Typischerweise wäre der Garnführungsabschnitt 94 ca. 10,16 cm (4") von der Seitenwand 14 entfernt, wenn sich der Fingerhalter 62 in seiner äußersten Stellung in dem Einstellschlitz 74 befindet, und er wäre ungefähr 20,32 cm (8") von der Seitenwand 14 entfernt, wenn sich der Fingerhalter 62 in seiner innersten Stellung in dem Einstellschlitz 74 befindet. Der Grund zum Einstellen der Stellung des Garnführungsabschnitts 94 bezogen auf die Seitenwand 14 besteht in der Anpassung an verschiedene Erntegüter und Gutbedingungen, die dazu führen, daß die äußeren Oberflächen der gebildeten Ballen 30 von unterschiedlichem Glättegrad sind. Je glätter die äußere Oberfläche des gebildeten Ballens 30 ist, desto wahrscheinlicher ist es, daß während des Wickelvorgangs oder wenn der Ballen 30 nach dem Auswerfen aus der Rundballenpresse 10 gehandhabt wird, Garnwindungen von dem Ende des Ballens 30 abrutschen. Dementsprechend wird der Garnführungsabschnitt 94 ca. 10,16 cm (4") von der Seitenwand 14 entfernt angeordnet, wenn die Ballenoberfläche eine Vielzahl starrer Gutstengel aufweist, die dazu tendieren, die Garnwindungen an ihrer Stelle zu halten, und er wird 20,32 cm (8") von der Seitenwand 14 entfernt sein, wenn die Ballenoberfläche relativ glatt und eben ist, wie dies der Fall sein kann, wenn z. B. relativ trockenes und kurzes Stroh gepreßt wird. Wenn der Ballen 30 eine Oberfläche zwischen diesen beiden Extremen aufweist, wird eine dementsprechende gewünschte Lage zwischen 10,16 cm und 20,32 cm gewählt. Während der Fingerhalter 62 hier als manuell einstellbar dargestellt ist, wird darauf hingewiesen, daß anstelle des Halters 70 und des Handrads 80 eine elektrisch oder hydraulisch angetriebene Verstellvorrichtung an den Fingerhalter 62 angeschlossen werden könnte, um ihn wahlweise unter den gewünschten Einstell-Stellungen hin- und herzubewegen.

In den Figuren 5 und 6 ist ein Garnführungszusammenbau 102 gezeigt, der anstelle des Garnführungszusammenbaus 60 benutzt werden könnte, wobei darauf hingewiesen wird, daß einige Teile des Garnführungszusammenbaus 102 die gleichen sind und das gleiche Bezugszeichen tragen wie die Teile des Garnführungszusammenbaus 60. Im einzelnen enthält der Garnführungszusammenbau 102 einen im wesentlichen L-förmigen Garnführungsfinger 104 in der Form einer Stange, die einen horizontalen querverlaufenden äußeren Tragabschnitt 106 und einen integrierten sich nach unten erstreckenden, inneren Garnkontaktabschnitt 108 enthält, der einen sich nach innen erstreckenden Endbereich 110 zum Zurückhalten des Garnabschnitts 56 aufweist. Der Garnführungsfinger 104 ist zum Zweck seiner Querverstellung mittels eines Zusammenbaus an den Halter 70 angeschlossen, der eine Befestigungsstange 112, die sich in axialer Ausrichtung mit dem äußeren Tragabschnitt 106 befindet, und eine leichte als Schraubenfeder ausgebildete Feder 114 aufweist, in deren gegenüberliegende Endbereiche sich der Tragabschnitt 106 und die Befestigungsstange 112 hineinerstrecken und in deren Mitte sich diese treffen. Die Feder 114 besitzt Schlaufen, die an ihren gegenüberliegenden Enden angeformt sind, wobei die Schlaufe am inneren Ende mittels einer Schraube 116 an dem Tragabschnitt 106 und die Schlaufe an dem äußeren Ende mittels einer Schraube 118 an der Befestigungsstange 112 verankert ist. Die Schraube 118 erstreckt sich durch die Befestigungsstange 112 und ist mittels der Mutter 78 auf diese geklemmt, während sich die Schraube 118 durch den Einstellschlitz 74 erstreckt und mittels des Handrads 80 und einer Büchse 120 an den Schenkel 72 geklemmt ist, die sich auf der Schraube 118 zwischen der Mutter 78 und dem Schenkel 72 befindet. Es wird deshalb angenommen, daß Erntegut, das durch den Gutflußbereich 98 und in die Ballenbildungskammer 20 gelangt, den inneren Garnkontaktabschnitt 108 berührt, so daß dieser nach oben und hinten gegen den Widerstand der Feder 114 geschwenkt wird.

Es wird davon ausgegangen, daß der Betrieb der Garnführungszusammenbauten 60 und 102 von der vorherigen Beschreibung klar ist, und dieser wird aus Gründen der Kürze hier nicht wiederholt. Es reicht aus, daß aufgrund der Lage des Handrads 80 außerhalb der Seitenwand 14 ein einfacher Zugang zum Lösen des Handrades 80 ohne Werkzeug oder ohne etwas zu zerlegen, gegeben ist, wenn es gewünscht wird, den Abstand zwischen dem Garnführungsabschnitt 94 oder 108 und der Seitenwand 14 zu ändern, um sicherzustellen, daß Windungen des Garnabschnitts 56, die nahe des Endes des Ballens 30 aufgelegt sind, weit genug von den Enden weg liegen, um ungeachtet der Änderungen des Ernteguts oder von dessen Zustand, die in einer Änderung in der Glätte der äußeren Oberfläche des gebildeten Ballens 30 resultieren, gesichert zu bleiben. Zudem verbiegen sich die Garnführungsabschnitte 94 und 108 in der Längsrichtung als Reaktion auf eine Berührung durch den Erntegutstrom, so daß sie dem Erntegutfluß nicht signifikant in die Quere kommen, aber sie üben eine beträchtliche seitliche Steifigkeit aus, derart, um in einer richtigen Weise zum Führen des Garnabschnitts 56 auf dem Ballen 30 zu funktionieren.

## Patentansprüche

1. Garnführungszusammenbau (60, 102) mit einem Garnführungsfinger (84, 104), der einerseits von einem Halter (70) aufgenommen ist und andererseits einen Garnführungsabschnitt (94, 108) aufweist, **dadurch gekennzeichnet, daß** der Garnführungsabschnitt (94, 108) im wesentlichen in einer Richtung in sich elastisch ausgebildet ist.

2. Garnführungszusammenbau nach Anspruch 1, **dadurch gekennzeichnet, daß** der Auslenkungswiderstand des Garnführungsfingers (84, 104) in einer Richtung wesentlich höher ist als einer anderen, quer dazu verlaufenden Richtung.

3. Garnführungszusammenbau nach Anspruch 1 oder 2, **dadurch gekennzeichnet, daß** ein Anschlag für den Garnführungsabschnitt (94, 108) vorgesehen ist.

4. Garnführungszusammenbau nach einem oder mehreren der vorherigen Ansprüche, **dadurch gekennzeichnet, daß** der Garnführungsabschnitt (94) in der Art einer gerade auslaufenden Schraubenfeder ausgebildet ist.

5. Garnführungszusammenbau nach einem oder mehreren der vorherigen Ansprüche, **dadurch gekennzeichnet, daß** der Garnführungsabschnitt (94) einen Bereich mit Windungen (86) aufweist, die einen Fingerhalter (62) teilweise umgeben und zu diesem vorzugsweise einen Abstand aufweisen.

6. Garnführungszusammenbau nach Anspruch 5, **dadurch gekennzeichnet, daß** der Fingerhalter (62) zwei im wesentlichen parallel zueinander verlaufende und miteinander verbundene Abschnitte (64, 68) aufweist, von denen ein Abschnitt (64) als Anschlag für den Garnführungsabschnitt (94) dient.

7. Garnführungszusammenbau nach einem oder mehreren der vorherigen Ansprüche 1 bis 3, **dadurch gekennzeichnet, daß** der Garnführungsfinger (104) mit dem Garnführungsabschnitt (108) in sich im wesentlichen starr ausgebildet ist und mittels einer Feder (114) in einer Richtung beweglich an einem ortsfesten Halter (70) angebracht ist.

8. Garnführungszusammenbau nach einem oder mehreren der vorherigen Ansprüche **dadurch gekennzeichnet, daß** die Feder (114) als Schraubenfeder ausgebildet ist und einenends den Garnführungsabschnitt (108) und anderenends eine zur Anbringung an dem Halter (70) bestimmte Befestigungsstange (112) aufnimmt und mit diesen drehfest verbunden ist.

9. Garnführungszusammenbau nach einem oder mehreren der vorherigen Ansprüche, **dadurch gekennzeichnet, daß** der Garnführungsfinger (84, 104) endseitig mit einer Schraube (78, 118) und einem auf dieser aufschraubbaren Handrad (80) versehen ist.

10. Rundballenpresse mit einem Garnführungszusammenbau (60, 102) nach einem oder mehreren der vorherigen Ansprüche.

11. Rundballenpresse nach Anspruch 10 **gekennzeichnet durch** eine oberhalb eines Guteinlasses (24) vorgesehene Ballenstarterwalze (26) und eine Riemenwalze (22'), wobei der Garnführungsfinger (84, 104) im Schnittbereich **durch** deren Drehachsen verlaufender horizontaler und vertikaler Ebenen liegt.

12. Rundballenpresse nach Anspruch 10 oder 11 **gekennzeichnet durch** einen Halter (70) an der Außenseite einer Seitenwand (14) zur Aufnahme des Garnführungsfingers (84, 104) in einer beliebigen Stellung in der Axialrichtung einer Ballenbildungskammer (20).

13. Rundballenpresse nach einem oder mehreren der vorherigen Ansprüche 10 bis 12, **dadurch gekennzeichnet, daß** der Halter (70) einen Einstellschlitz (74) zur Aufnahme der Schraube (78, 118) aufweist.

14. Rundballenpresse nach einem oder mehreren der vorherigen Ansprüche 10 bis 13, **dadurch gekennzeichnet, daß** die Seitenwand (14) und der Halter (70) miteinander fluchtende Öffnungen aufweisen, durch die sich der Garnführungsfinger (84, 104) von dem Innenraum der Ballenbildungskammer (20) zu dem außerhalb der Ballenbildungskammer (20) gelegenen Halter 70 erstreckt.

15. Rundballenpresse nach einem oder mehreren der vorherigen Ansprüche 10 bis 14, **dadurch gekennzeichnet, daß** der Halter (70) mit mehreren Markierungen (100) versehen ist.

## Claims

1. A twine guide assembly (60, 102) with a twine guide finger (84, 104) which is received by a bracket (70) at one end and has a twine guide section (94, 108) at the other end, **characterized in that** the twine guide section (94, 108) itself is of elastic form essentially in one direction.

2. A twine guide assembly according to claim 1, **characterized in that** the resistance to defection of the twine guide finger (84, 104) is substantially higher in one direction than in another direction running transversely thereto.

3. A twine guide assembly according to claim 1 or 2, **characterized in that** a stop is provided for the twine guide section (94, 108).

4. A twine guide assembly according to one or more of the preceding claims, **characterized in that** the twine guide section (94) is in the nature of straight helical spring running out straight.

5. A twine guide assembly according to one or more of the preceding claims, **characterized in that** the twine guide section (94) comprises a region with turns (86) which partially surround a finger holder (62) and preferably are spaced therefrom.

6. A twine guide assembly according to claim 5, **characterized in that** the finger holder (62) comprises two sections (64, 68) running substantially parallel to one another and connected together, of which one section (64) serves as a stop for the twine guide section (94).

7. A twine guide assembly according to one or more of the preceding claims 1 to 3, **characterized in that** the twine guide finger (104) with the twine guide section (108) is of substantially rigid form and is fitted movable in one direction on a positionally fixed bracket (70) by means of a spring (114).

8. A twine guide assembly according to one or more of the preceding claims, **characterized in that** the spring (114) is in the form of a helical spring and receives the twine guide section (108) at one end and at the other end receives a mounting rod (112) for fitting on the bracket (70) and is connected rotationally fast thereto.

9. A twine guide assembly according to one or more of the preceding claims, **characterized in that** the twine guide finger (84, 104) is provided at the end with a screw (78, 118) and a handwheel (80) which can be screwed thereon.

10. A round baler with a twine guide assembly (60, 102) according to one or more of the preceding claims.

11. A round baler according to claim 10, **characterized by** a bale starter roll (26) provided above a crop inlet (24) and a belt roll (22'), wherein the twine guide finger (84, 104) lies in the region of intersection of horizontal and vertical planes running through their axes of rotation.

12. A round baler according to claim 10 or 11, **characterized by** a bracket (70) on the outside of a sidewall (14) for receiving the twine guide finger (84, 104) in an arbitrary position in the axial direction of a bale forming chamber (20).

13. A round baler according to one or more of the preceding claims 10 to 12, **characterized in that** the bracket (70) has an adjustment slot (74) for receiving the screw (78, 119).

14. A round baler according to one or more of the preceding claims 10 to 13, **characterized in that** the sidewall (14) and the bracket (70) have openings aligned with one another, through which the twine guide finger (84, 104) extends from the interior of the bale forming chamber (20) to the bracket (70) located outside the bale forming chamber (20).

15. A round baler according to one or more of the preceding claims 10 to 14, **characterized in that** the bracket (70) is provided with a plurality of markings (100).

## Revendications

1. Système de guidage de ficelle (60, 102) comportant un doigt de guidage de ficelle (84, 104), qui, d'une part est supporté par un support (70), et d'autre part présente une section de guidage de ficelle (94, 108), **caractérisé en ce que** la section de guidage de ficelle (94, 108) est en elle-même élastique, essentiellement dans une direction.

2. Système de guidage de ficelle selon la revendication 1, **caractérisé en ce que** la résistance à la déviation du doigt de guidage de ficelle (84, 104) est sensiblement plus élevée dans une direction que dans une autre direction transversale à la première.

3. Système de guidage de ficelle selon l'une ou l'autre des revendications 1 ou 2, **caractérisé en ce qu'**il est prévu une butée pour la section de guidage de ficelle (94, 108).

4. Système de guidage de ficelle selon l'une ou plusieurs des revendications précédentes, **caractérisé en ce que** la section de guidage de ficelle (94) est réalisée en forme de ressort hélicoïdal à pointe droite.

5. Système de guidage de ficelle selon l'une ou plusieurs des revendications précédentes, **caractérisé en ce que** la section de guidage de ficelle (94) présente une région avec des spires (86) qui entourent partiellement un porte-doigt (62), lequel est de préférence espacé de celles-ci.

6. Système de guidage de ficelle selon la revendication 5, **caractérisé en ce que** le porte-doigt (62) présente deux sections pratiquement parallèles l'une à l'autre, et réunies entre elles (64, 68), dont l'une (64) sert de butée à la section de guidage de ficelle (94).

7. Système de guidage de ficelle selon l'une ou plusieurs des revendications précédentes, **caractérisé en ce que** le doigt de guidage de ficelle (104) est réalisé en une seule pièce pratiquement rigide avec la section de guidage de ficelle (108), et est amené, de façon mobile dans une direction, contre un appui fixe (70) au moyen d'un ressort (114).

8. Système de guidage de ficelle selon l'une ou plusieurs des revendications précédentes, **caractérisé en ce que** le ressort (114) est constitué par un ressort hélicoïdal et soulève, d'une part, la section de guidage de ficelle (108), et, d'autre part, une tige de fixation (112) destinée à l'amener contre l'appui (70), et solidaire en rotation avec celle-ci.

9. Système de guidage de ficelle selon l'une ou plusieurs des revendications précédentes, **caractérisé en ce que** le doigt de guidage de ficelle (84, 104) présente, à une extrémité, un filetage (78, 118) et un bouton tournant (80) sur celui-ci.

10. Presse à balles rondes comportant un système de guidage de ficelle (60, 102), selon l'une ou plusieurs des revendications précédentes.

11. Presse à balles rondes selon la revendication 10, **caractérisée par** un cylindre de départ de balle (26) et un cylindre de serrage (22') prévus au-dessus d'une admission de produit (24), le doigt de guidage de ficelle (84, 104) étant situé dans la portion de section définie par les plans passant par leurs axes de rotation.

12. Presse à balles rondes selon l'une des revendications 10 ou 11, **caractérisée par** un appui (70) situé sur la face extérieure d'une paroi latérale (14) et destiné à soulever le doigt (84, 104) dans une position souhaitée dans la direction axiale d'une chambre de formation de balles (20).

13. Presse à balles rondes selon l'une ou plusieurs des revendications 10 à 12, **caractérisée en ce que** l'appui (70) présente une fente de mise en place (74) pour accueillir la vis (78, 118).

14. Presse à balles rondes selon l'une ou plusieurs des revendications 10 à 13, **caractérisée en ce que** la paroi latérale (14) et l'appui (70) présentent des ouvertures au même niveau les unes des autres, à travers lesquelles s'étend le doigt de guidage de ficelle (84, 104) depuis l'espace intérieur de la chambre de formation de balles (20) jusqu'à l'appui (70) situé à l'extérieur de la chambre de formation de balles (20).

15. Presse à balles rondes selon l'une ou plusieurs des revendications 10 à 14, **caractérisée en ce que** l'appui (70) présente plusieurs marques (100).
